# EUROPÄISCHE PATENTSCHRIFT

(11) **EP 1 992 759 B1**
(45) Veröffentlichungstag und Bekanntmachung des Hinweises auf die Patenterteilung: **08.07.2020**
(21) Anmeldenummer: 08103376.3
(22) Anmeldetag: 04.04.2008
(51) Int. Cl.: E04C 2/36, A47B 96/00, B27D 5/00, E06B 3/00

(54) **Leichtbauplatte sowie Verfahren zur Herstellung einer Leichtbauplatte.**
Lightweight construction board and method for producing a lightweight construction board.
Panneau de construction léger et procédé de fabrication d'un panneau de construction léger.

(30) Priorität: 14.05.2007 DE 102007022918
(43) Veröffentlichungstag der Anmeldung: 19.11.2008
(73) Patentinhaber: Fritz Egger GmbH & Co. OG, 6380 St. Johann in Tirol (AT)
(72) Erfinder: Berktold, Albert, 6380 St. Johann/Tirol (AT)
(74) Vertreter: Cohausz & Florack

(56) Entgegenhaltungen:
- EP-A- 0 253 628
- EP-A- 0 292 813
- WO-A-2007/141103
- DE-A1- 10 224 530
- DE-A1- 19 961 366
- DE-A1-102005 023 065
- WPI WORLD PATENT INFORMATION DERWENT, Bd. 25, Nr. 80 HOST- DERWENT, 13. Mai 1980 (1980-05-13), XP002033320
- ANONYMOUS: "High initial tack composite adhesive" RESEARCH DISCLOSURE, MASON PUBLICATIONS, HAMPSHIRE, GB, Bd. 328, Nr. 53, 1. August 1991 (1991-08-01), XP007116736 ISSN: 0374-4353

## Beschreibung

Die Erfindung betrifft eine Leichtbauplatte, mit zwei Decklagen, mit einer wabenförmigen Struktur als Mittellage, die zwischen den Decklagen angeordnet ist und mit einem die Mittellage mit den Decklagen zumindest abschnittsweise verbindenden Klebstoff sowie ein Verfahren zur Herstellung einer Leichtbauplatte, mit zwei Decklagen, mit einer wabenförmigen Struktur als Mittellage, die zwischen den Decklagen angeordnet ist und mit einem die Mittellage mit den Decklagen zumindest abschnittsweise verbindenden Klebstoff.

Leichtbauplatten (LBPL) sind aus dem Stand der Technik hinlänglich bekannt. Auch im Möbel- und Innenausbau werden diese seit langer Zeit in vielfältiger Weise verwendet. Haupteinsatzgebiet war und ist hier speziell der Türenbau. So ist es vor allem bei Zimmertüren, die also geringen Anforderungen hinsichtlich des Wärme- und Schallschutzes unterliegen, üblich ein Rahmenelement mit einem Wabenkern beidseitig zu beplanken und dieses dann mit den entsprechenden Bohrungen, Fräsungen, etc. zu einem Türelement weiterzuverarbeiten.

Im gehobenen Einrichtungsbereich wurden ebenfalls Leichbauplatten im Möbelbau eingesetzt, weil durch deren Einsatz sehr große Wandstärken realisiert werden können, die besondere gestalterische Möglichkeiten bieten. In jüngerer Zeit werden auch bei Massenmöbeln verstärkt Leichtbauplatten verwendet, so dass auch ein Einsatz auf breiterem Gebiet wirtschaftlich möglich wird. Damit sind die verschiedenen Vorzüge der Leichtbauplatten einer größeren Schicht von Endverbrauchern zugängig.

Der Hersteller von Möbeln braucht Leichtbauplatten heute nicht mehr selber herzustellen, wie dies früher der Fall war. Mehrere Arbeitsgänge waren dazu notwendig. Zunächst musste ein Rahmen hergestellt werden, eventuell mit mehreren Querriegeln, auf den dann die Decklagen aufgebracht wurden und der die verschiedenen Beschläge aufzunehmen hatte. Zwischen den Decklagen wurden Leichtfaserplatten, mineralische Dämmwolle, Kartonwaben oder ähnliches eingebracht. Damit wurde dem Element mehr Kompaktheit und eventuell auch eine verbesserte Stabilität verliehen. Zumeist mussten in separaten Arbeitsgängen die Deckschichten auch noch aufwändig oberflächenbehandelt werden. So waren als Decklagen furnierte oder anderweitig beschichtete Hartfaserplatten üblich, wobei das fertige Element auch erst durch abschließendes Lackieren seine endgültige Oberfläche erhalten kann.

Heute werden Leichtbauplatten in zunehmendem Maß auch industriell gefertigt. Dazu wird eine leichte Mittellage mit Decklagen versehen, zumeist durch Klebung, so dass ein großformatiger, rahmenloser Verbund entsteht. Je nach geforderter Stabilität der Platte werden unterschiedlich dicke Decklagen, zumeist aus einem Holzwerkstoff wie Span- oder Faserplatte, eingesetzt. Die verwendeten Platten können bereits beschichtet sein, also etwa mit einem Laminat, einer Farbe, einem Druck mit Versiegelung, einer Melaminharzschicht, einem Furnier, etc. versehen sein. Als Mittellagen werden Kartonwaben oder Schaumstoffplatten bevorzugt. Für bestimmte Verwendungszwecke sind möglicher Weise auch Wabenmaterialien aus anderen Materialien als Papier oder Karton sinnvoll. So können dafür dünnste Plattenmaterialien oder auch dünnwandiges Metall, beispielsweise aus Aluminium eingesetzt werden. Es ist aber auch möglich als Mittellagen leichte Holzwerkstoffe wie etwa entsprechende Spanplatten oder Faserplatten oder auch Massivholz geringer Dichte, wie Balsaholz, einzusetzen. Mit entsprechenden Ausnehmungen versehen sind grundsätzlich alle Materialien zum Einsatz als leichte Mittellage möglich. So werden dafür beispielsweise auch Holzarten herangezogen, die zwar nicht besonders geringes Gewicht aufweisen, dafür aber gut verfügbar sind und sich gut mit zerspanenden Werkzeugen bearbeiten lassen. Auch sind leichte Mittellagen aus Halmbündeln, die miteinander verbunden zu flächigen Gebilden aufgeschnitten werden, sodass dann die Länge der Halmabschnitte der Dicke der Mittellage entspricht, bekannt.

Gegenwärtig erfolgt die Verklebung der Decklagen mit der Mittellage vielfach durch einen Polyurethanklebstoff (PU-Klebstoff), der zunächst auf die Innenseite der Decklagen aufgebracht wird, wobei anschließend die Mittellage mit der mit Klebstoff versehenen Seite der Decklagen zusammengeführt wird.

Problematisch bei der Herstellung von Leichtbauplatten auf die zuvor beschriebene Weise ist allerdings, dass der PU-Klebstoff schwierig zu verarbeiten und relativ teuer ist.

Aus der EP 0 253 628 A2 ist die Herstellung einer Sperrholzplatte aus mehreren Lagen von Holzfurnier, Karton oder Kunststoff bekannt, wobei alle Lagen des herzustellenden Bauteils aus demselben Material bestehen.

Die DE 10 2005 023 065 A1 betrifft eine Leichtbauplatte mit zwei Platten als Decklagen und einer wabenförmigen Struktur aus beispielsweise Pappe oder Papier als Mittellage, die zwischen den Decklagen angeordnet ist, und mit einem die Mittellage mit den Decklagen zumindest abschnittsweise verbindenden Klebstoff. Das Verkleben der Mittellage mit den Decklagen erfolgt mittels einer Vergussmasse auf Polyurethanbasis und gegebenenfalls zusätzlich mit Leim.

Es ist daher die Aufgabe der vorliegenden Erfindung, eine Leichtbauplatte und ein entsprechendes Herstellungsverfahren bereitzustellen, womit ein reduzierter Herstellungsaufwand gewährleistet ist.

Die zuvor hergeleitete und aufgezeigte Aufgabe wird gemäß einer ersten Lehre der vorliegenden Erfindung bei einer Leichtbauplatte der eingangs genannten Art dadurch gelöst, dass als Klebstoff ein Montageklebstoff und ein Endklebstoff vorgesehen sind, dass der Montageklebstoff ein PU-Klebstoff ist, dass die Mittellage mit mindestens einer der zwei Decklagen zumindest abschnittsweise durch den Montageklebstoff verbunden ist, dass die Mittellage mit mindestens einer der zwei Decklagen zumindest abschnittsweise durch den Endklebstoff verbunden ist,dass die Aushärtdauer des Endklebstoffs länger als die Aushärtdauer des Montageklebstoffs ist und dass die Wärmebeständigkeit des Endklebstoffs größer als die Wärmebeständigkeit des Montageklebstoffs ist.

Ferner wird die Aufgabe gemäß einer zweiten Lehre der vorliegenden Erfindung bei einem Verfahren der eingangs genannten Art dadurch gelöst, dass ein die Mittellage mit mindestens einer der zwei Decklagen zumindest abschnittsweise verbindender PU-Klebstoff als Montageklebstoff appliziert wird, dass ein die Mittellage mit mindestens einer der zwei Decklagen zumindest abschnittsweise verbindender Endklebstoff appliziert wird, dass die Aushärtdauer des Endklebstoffs länger als die Aushärtdauer des Montageklebstoffs eingestellt wird und dass die Wärmebeständigkeit des Endklebstoffs größer als die Wärmebeständigkeit des Montageklebstoffs ist. Insbesondere werden die jeweiligen Lagen in einer Presse miteinander verklebt, derart, dass der Montageklebstoff unmittelbar nach dem Pressvorgang eine erste Fixierung bewirkt, die geeignet ist, zur Stabilisierung des Verbundes der miteinander verbundenen Lagen während der Aushärtung des Endklebstoffes beizutragen.

Erfindungsgemäß erfolgt die Verklebung von Decklage und Mittellage unter Verwendung zweier Klebstoffe mit unterschiedlicher Aushärtdauer. Auf diese Weise kann mit einer verringerten Menge eines Montageklebstoffs, nämlich des an sich bekannten PU-Klebstoffs, eine erste Fixierungsklebung erfolgen, die ein Verschieben der Mittellage relativ zu der damit verklebten Decklage während weiterer Bearbeitungsschritte bei der Leichtbauplattenherstellung verhindert, wobei der zusätzlich vorgesehene Endklebstoff, bei dem es sich um einen kostengünstigeren und einfacher zu verarbeitenden Klebstoff handeln kann, langsam aushärtet und eine beständigere Verbundverklebung bewirkt. Gemäß der vorliegenden Erfindung kann nach wie vor der relativ schnell aushärtende PU-Klebstoff verwendet werden, allerdings in einer deutlich reduzierten Menge gegenüber dem Stand der Technik, da auf diese Weise lediglich eine Vorfixierung erfolgen soll, die eine Stabilisierung des Verbundes aus miteinander verbundenen Lagen während des Aushärtens des Endklebstoffs ermöglicht. Dagegen kann, da bereits eine Vorfixierung und Stabilisierung mit einem relativ schnell aushärtenden Montageklebstoff erfolgt, die endgültige Festigkeit durch einen deutlich langsamer aushärtenden Klebstoff erfolgen. Ein solcher Klebstoff ist häufig relativ kostengünstig und außerdem auch einfacher zu verarbeiten. Auf diese Weise werden die Presszeiten, also die Verweilzeit des Lagenverbundes in einer Presse, gegenüber dem Stand der Technik deutlich verkürzt, da der Verbund nicht mehr bis zum endgültigen Aushärten der Verklebung in der Presse verweilen muss. Die Funktion der Presse während des Aushärtvorgangs übernimmt erfindungsgemäß der relativ schnell aushärtende Montageklebstoff.

Gemäß einer Ausgestaltung der erfindungsgemäßen Leichtbauplatte verbindet der Endklebstoff beide Decklagen mit der Mittellage. Auf diese Weise kann sowohl zwischen der Mittellage und der unteren Decklage als auch zwischen der Mittellage und der oberen Decklage eine reduzierte Menge an Montageklebstoff, nämlich PU-Klebstoff verwendet werden, ohne nachteilige Auswirkungen auf die endgültige Festigkeit der Leichtbauplatte.

Gemäß einer weiteren Ausgestaltung der erfindungsgemäßen Leichtbauplatte sind der Montageklebstoff und der Endklebstoff in jeweils unterschiedlichen Abschnitten, vorzugsweise benachbarten Abschnitten, vorgesehen. Auf diese Weise wird verhindert, dass sich die beiden Klebstofftypen gegenseitig beeinflussen, indem sie sich beispielsweise vermischen. Es sind aber auch durchaus Klebstoffe denkbar, die sich nicht gegenseitig beeinflussen und dadurch ermöglichen, dass zunächst auf die Oberflächen der eine Klebstoff, beispielsweise der Endklebstoff, und anschließend auf diesem Klebstoff der andere Klebstoff aufgebracht wird.

Bevorzugt werden die Klebstoffe aber in jeweils unterschiedlichen Abschnitten appliziert, so dass weder der Montageklebstoff den Endklebstoff noch der Endklebstoff den Montageklebstoff beeinflussen kann. Beispielsweise ist es denkbar, vor dem Zusammenfügen der Mittellage mit der jeweiligen Decklage den Montageklebstoff auf der Mittellage und den Endklebstoff auf der jeweiligen Decklage zu applizieren oder umgekehrt.

Das Applizieren des Klebstoffs kann auf unterschiedliche Weise erfolgen. So ist gemäß einer weiteren Ausgestaltung ein flächiges, streifenförmiges, fadenförmiges und/oder punktuelles Applizieren des Klebstoffes, sowohl des Montageklebstoffes als auch des Endklebstoffes, denkbar. Dabei kann der Klebstoff aufgesprüht, aufgegossen, aufgedüst, aufgespritzt und/oder aufgewalzt werden. Beispielsweise ist vorgesehen, dass erst der Endklebstoff, vorzugsweise vollflächig, auf die jeweilige Decklage und/oder die Mittellage appliziert wird und anschließend der Montageklebstoff, vorzugsweise partiell, auf die jeweilige andere Oberfläche bzw. die jeweilige Decklage und/oder die Mittellage appliziert wird. Vorteilhaft ist es, wenn der Endklebstoff aufgewalzt und/oder der Montageklebstoff aufgesprüht wird, was nacheinander erfolgen kann.

Des Weiteren kann der Endklebstoff ein Schmelzklebstoff sein, aber auch ein Dispersionsklebstoff oder ein Polykondensationsklebstoff.

Insbesondere kann es sich bei den genannten Klebstoffen um einen nicht reaktiven, einkomponentig reaktiven oder zweikomponentig reaktiven Klebstoff handeln. Beispielhaft, jedoch nicht abschließend, sind hier Äthylen-Vinylacetat (EVA), Äthylen-Acrylsäureester-Copolymerisate (EEA), Polyurethan (PUR), Plyamide (PA), thermoplastische (lineare, gesättigte) Polyester und amorphe Poly-alpha-olefine (APAO) sowie reaktive Zusätze wie Isocyanat und Epoxide oder Polyolkomponenten zu nennen. In vorteilhafter Weise kann so auf eine Vielfalt von bekannten und günstigen Klebstoffen zurückgegriffen werden. Bevorzugt ist der Klebstoff, insbesondere der Endklebstoff, ein bei Raumtemperatur aushärtender Klebstoff.

Weiterhin kann der Endklebstoff ein Polyvinylacetatleim (PVAC), ein Harnstoff-Formaldehydharz-Klebstoff (UF-Leim), ein Melamin-Harnstoff-Formaldehydharz-Klebstoff (MUF-Leim), Phenol-Formaldehydharz-Klebstoff (PF-Leim), ein Melamin-Harnstoff-Phenol-Formaldehydharz-Klebstoff (MUPF-Leim), Phenol-Recorcin-Formaldehydharz-Klebstoff (PRF-Leim), oder ein Wasserglasleim (Alkalisilikat) sein. Auch der Endklebstoff kann ein PU-Klebstoff sein. Dieser hat eine hohe Klebfestigkeit und kann Unebenheiten und dicke Klebstofffugen gut überbrücken. Ferner kann der Endklebstoff ein Kleister, beispielsweise auf Stärke- und/oder Zelluloseätherbasis, sein.

Erfindungsgemäß ist die Wärmebeständigkeit des Endklebstoffs größer als die Wärmebeständigkeit des Montageklebstoffs. Auf diese Weise kann nach dem Applizieren des Montageklebstoffs und der damit verbundenen Vorfixierung bis zum Zeitpunkt der endgültigen Aushärtung des Endklebstoffes bzw. der endgültigen Fertigstellung der Leichtbauplatte noch eine Bearbeitung unter Wärmeeinwirkung erfolgen, beispielsweise ein Beschichten mindestens einer Decklage und/oder einer Schmalseite der Leichtbauplatte. So kann, bevor der Endklebstoff vollständig ausgehärtet ist, bereits mittels des Postforming-Verfahrens oder des Softforming-Verfahrens eine Bearbeitung im Kantenbereich der Leichtbauplatte erfolgen, was beispielsweise zur Herstellung von Küchenarbeitsplatten üblich ist. Das Postforming-Verfahren und das Softforming-Verfahren sind aus dem Stand der Technik hinlänglich bekannt und brauchen an dieser Stelle nicht weiter beschrieben werden.

Betreffend die Wärmebeständigkeit wird hierbei insbesondere auf die in DIN EN 14292 gewählte Definition hingewiesen. Im allgemeinen kann die Wärmbeständigkeit so definiert werden, dass die gewünschte Klebeigenschaft und Klebefunktion eines Klebstoffs bei einer höheren Temperatur als der durch die Wärmbeständigkeit angegebenen Temperatur nicht mehr gegeben ist. Mit anderen Worten wird die Wärmbeständigkeit in der physikalischen Einheit der Temperatur angegeben.

Besonders vorteilhaft werden also die Anforderungen eines schnellen Abbindens und somit Verklebens der Mittellage mit der mindestens einen Decklage sowie ggf. die erforderliche hohe Wärmebeständigkeit zur Nachbearbeitung der Decklagen bzw. der Schmalflächen auf zwei Klebstoffe verteilt. Während der Montageklebstoff schon die erforderliche Verbindung der Mittellage zur mindestens einen Decklage hergestellt hat, hat der Endklebstoff noch Zeit, seine Endfestigkeit zu erreichen. Ist die Endfestigkeit des Endklebstoffs erreicht, so führt seine ausreichende Wärmebeständigkeit dazu, dass die Mittellage mit der mindestens einen Decklage verbunden bleibt, auch wenn der Montageklebstoff zumindest teilweise durch die beim Nacharbeiten entstehenden Temperaturen aufweicht.

Da die Mittellage bei bestimmten Ausführungsformen der Leichtbauplatten auch durch Riegel verstärkt sein kann, ist es vorteilhaft, wenn neben der Verklebung der Mittellage mit den Decklagen gleichzeitig auch die Verklebung der Riegel mit den Decklagen und/oder der Mittellage auf die erfindungsgemäße Weise, das heißt unter Verwendung eines Montageklebstoffs oder eines Endklebstoffs mit jeweils unterschiedlicher Aushärtdauer, erfolgt.

Es gibt nun eine Vielzahl von Möglichkeiten, die erfindungsgemäße Leichtbauplatte und das erfindungsgemäße Verfahren auszugestalten und weiterzubilden. Hierzu wird beispielsweise verwiesen einerseits auf die dem Patentanspruch 1 nachgeordneten Patentansprüche, andererseits auf die Beschreibung eines Ausführungsbeispiels in Verbindung mit der Zeichnung. In der Zeichnung zeigt:

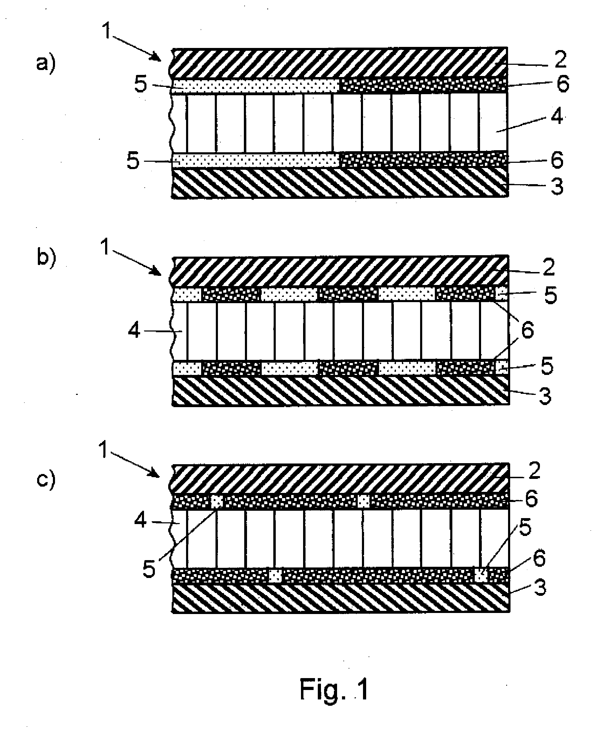

Fig. 1a ein erstes Ausführungsbeispiel einer Leichtbauplatte gemäß der vorliegenden Erfindung,
Fig. 1b ein zweites Ausführungsbeispiel einer Leichtbauplatte gemäß der vorliegenden Erfindung, und
Fig. 1c ein drittes Ausführungsbeispiel einer Leichtbauplatte gemäß der vorliegenden Erfindung.

In den Figuren 1a bis c ist schematisch in einer Schnittansicht jeweils eine Leichtbauplatte 1 mit zwei Decklagen 2 und 3 sowie mit einer Mittellage 4 dargestellt, wobei die Mittellage 4 einerseits mit der Decklage 2 und andererseits mit der Decklage 3 zumindest abschnittsweise durch einen Montageklebstoff 5 verbunden ist.

Neben dem Montageklebstoff 5 ist auch noch ein Endklebstoff 6 zur Verbindung der Mittellage 4 mit der jeweiligen Decklage 2 bzw. 3 vorgesehen. Erfindungsgemäß ist dabei die Aushärtdauer des Endklebstoffs 6 länger als die Aushärtdauer des Montageklebstoffs 5.

Auf diese Weise besteht die Möglichkeit einer Vorfixierung der Mittellage 4 an der jeweiligen Decklage 2 bzw. 3, wobei als Fixierungsklebstoff bzw. Montageklebstoff 5 eine relativ kleine Menge des allgemein üblichen, aber teuren und schwierig zu verarbeitenden, PU-Klebstoffs verwendet wird. Für die beständigere Verbundverklebung kann dann als Endklebstoff 6 ein kostengünstigerer Klebstoff, beispielsweise ein Dispersionsklebstoff, Polykondensationsklebstoff oder Schmelzklebstoff, verwendet werden.

Die Verwendung der zwei Klebstoffe mit jeweils unterschiedlicher Aushärtdauer hat den Vorteil, dass die Menge an teurem Kleber auf ein Minimum reduziert werden kann, dennoch aber, da der Montageklebstoff eine Stabilisierung während des Aushärtens des Endklebstoffs ermöglicht, die Verbindung zwischen Mittellage 4 und jeweiliger Decklage 2 bzw. 3 ausreichend fest ist, um den Lagenverbund nach einer relativ kurzen Zeit aus der Presse zu entnehmen und zu Lagern. In der Zeit der Lagerung hat dann der kostengünstigere Endklebstoff 6 ausreichend Zeit, auszuhärten und die endgültige Festigkeit der Leichtbauplatte 1 herbeizuführen.

In den in den Figuren 1a bis c dargestellten Ausführungsbeispielen verbindet der Endklebstoff 6 beide Decklagen 2 und 3 mit der Mittellage 4, wobei der Montageklebstoff 5 und der Endklebstoff 6 in jeweils unterschiedlichen Abschnitten vorgesehen sind, so dass sich die Klebstoffe 5 und 6 gegenseitig nicht beeinflussen können.

Gemäß der Figuren 1a bis c ist vor dem Zusammenfügen der Mittelage 4 mit der jeweiligen Decklage 2 bzw. 3 der Endklebstoff 6 auf den Decklagen 2 und 3 appliziert worden, und zwar in Fig. 1a flächig, in Fig. 1b streifenförmig und in Fig. 1c ebenfalls flächig.

Der Montageklebstoff 5 ist in Fig. 1a gleichzeitig mit dem Endklebstoff 6 auf der jeweiligen Decklage 2 bzw. 3, und zwar ebenfalls flächig, appliziert worden.

In Fig. 1b ist der Montageklebstoff 5 vor dem Zusammenfügen der Mittellage 4 mit der jeweiligen Decklage 2 bzw. 3 auf der Mittellage 4 appliziert worden, und zwar streifenförmig und derart, dass in dem zusammengefügten Zustand, welcher in Fig. 1b dargestellt ist, die beiden Klebstoffe 5 und 6 in benachbarten Abschnitten angeordnet sind.

In Fig. 1c ist der Montageklebstoff 5 lediglich punktuell appliziert worden, und zwar auf Teilen der wabenförmigen Struktur der Mittellage 4.

## Patentansprüche

1. Leichtbauplatte (1),
- mit zwei Decklagen (2,3),
- mit einer wabenförmigen Struktur als Mittellage (4), die zwischen den Decklagen (2,3) angeordnet ist, und
- mit einem die Mittellage (4) mit den Decklagen (2,3) zumindest abschnittsweise verbindenden Klebstoff, **dadurch gekennzeichnet,**
- **dass** als Klebstoff ein Montageklebstoff (5) und ein Endklebstoff (6) vorgesehen sind,
- **dass** der Montageklebstoff (5) ein PU-Klebstoff ist,
- **dass** die Mittellage (4) mit mindestens einer der zwei Decklagen (2,3) zumindest abschnittsweise durch den Montageklebstoff (5) verbunden ist,
- **dass** die Mittellage (4) mit mindestens einer der zwei Decklagen (2,3) zumindest abschnittsweise durch den Endklebstoff (6) verbunden ist,
- **dass** die Aushärtdauer des Endklebstoffs (6) länger als die Aushärtdauer des Montageklebstoffs (5) ist und
- **dass** die Wärmebeständigkeit des Endklebstoffs (6) größer als die Wärmebeständigkeit des Montageklebstoffs (5) ist.

2. Leichtbauplatte (1) nach Anspruch 1, **dadurch gekennzeichnet, dass** der Endklebstoff (6) beide Decklagen (2,3) mit der Mittellage (4) verbindet.

3. Leichtbauplatte (1) nach Anspruch 1 oder 2, **dadurch gekennzeichnet, dass** der Montageklebstoff (5) und der Endklebstoff (6) in jeweils unterschiedlichen, insbesondere benachbarten, Abschnitten vorgesehen sind.

4. Leichtbauplatte (1) nach einem der Ansprüche 1 bis 3, **dadurch gekennzeichnet, dass** der Klebstoff (5,6) flächig, streifenförmig, fadenförmig und/oder punktuell appliziert worden ist.

5. Leichtbauplatte (1) nach einem der Ansprüche 1 bis 4, **dadurch gekennzeichnet, dass** der Endklebstoff (6) ein Schmelzklebstoff, Dispersionsklebstoff oder Polykondensationklebstoff und/oder ein Polyvinylacetatleim, ein Harnstoff-Formaldehydharz-Klebstoff oder ein Wasserglasleim ist.

6. Leichtbauplatte (1) nach einem der Ansprüche 1 bis 5, **dadurch gekennzeichnet, dass** der Klebstoff (5,6) ein nicht reaktiver, einkomponentig reaktiver oder zweikomponentig reaktiver Klebstoff und/oder ein bei Raumtemperatur aushärtender Klebstoff ist.

7. Verfahren zur Herstellung einer Leichtbauplatte (1), mit zwei Decklagen (2,3), mit einer wabenförmigen Struktur als Mittellage (4), die zwischen den Decklagen (2,3) angeordnet ist, und mit einem die Mittellage (4) mit den Decklagen (2,3) zumindest abschnittsweise verbindenden Klebstoff, **dadurch gekennzeichnet,**
- **dass** ein die Mittellage (5) mit mindestens einer der zwei Decklagen (2,3) zumindest abschnittsweise verbindender PU-Klebstoff als Montageklebstoff (5) appliziert wird,
- **dass** ein die Mittellage (5) mit mindestens einer der zwei Decklagen (2,3) zumindest abschnittsweise verbindender Endklebstoff (6) appliziert wird,
- **dass** die Aushärtdauer des Endklebstoffs (6) länger als die Aushärtdauer des Montageklebstoffs (5) eingestellt wird und
- **dass** die Wärmebeständigkeit des Endklebstoffs (6) größer als die Wärmebeständigkeit des Montageklebstoffs (5) ist.

8. Verfahren nach Anspruch 7, **dadurch gekennzeichnet, dass** die Lagen (2,4; 3,4; 2,3,4) in einer Presse miteinander verklebt werden, derart, dass der Montageklebstoff (5) unmittelbar nach dem Pressvorgang eine erste Fixierung bewirkt, die geeignet ist, zur Stabilisierung des Verbundes der miteinander verbundenen Lagen (2,4; 3,4; 2,3,4) während der Aushärtung des Endklebstoffes (6) beizutragen.

9. Verfahren nach Anspruch 7 oder 8, **dadurch gekennzeichnet, dass** der Klebstoff (5,6) flächig, streifenförmig, fadenförmig und/oder punktuell appliziert wird.

10. Verfahren nach einem der Ansprüche 7 bis 9, **dadurch gekennzeichnet, dass** der Klebstoff (5,6) aufgesprüht, aufgegossen, aufgedüst, aufgespritzt und/oder aufgewalzt wird.

11. Verfahren nach einem der Ansprüche 7 bis 10, **dadurch gekennzeichnet, dass** erst der Endklebstoff (6), vorzugsweise vollflächig, auf die jeweilige Decklage (2;3) und/oder die Mittellage (4) appliziert wird und anschließend der Montageklebstoff (5), vorzugsweise partiell, auf die jeweilige Decklage (2;3) und/oder die Mittellage (4) appliziert wird, wobei insbesondere der Endklebstoff (6) aufgewalzt und/oder der Montageklebstoff (5) aufgesprüht wird.

12. Verfahren nach einem der Ansprüche 7 bis 11, **dadurch gekennzeichnet, dass** der Montageklebstoff (5) auf den zuvor applizierten Endklebstoff (6) aufgebracht wird.

13. Verfahren nach einem der Ansprüche 7 bis 12, **dadurch gekennzeichnet, dass** vor dem Zusammenfügen der Mittellage (4) mit der jeweiligen Decklage (2;3) der Montageklebstoff (5) auf der Mittellage (4) und der Endklebstoff (6) auf der jeweiligen Decklage (2;3) und/oder vor dem Zusammenfügen der Mittellage (4) mit der jeweiligen Decklage (2;3) der Endklebstoff (6) auf der Mittellage (4) und der Montageklebstoff (5) auf der jeweiligen Decklage (2;3) appliziert wird.

## Claims

1. Lightweight building board (1),
- having two cover layers (2, 3),
- having a honeycomb structure as a central layer (4), which is arranged between the cover layers (2, 3), and
- having an adhesive connecting the central layer (4) to the cover layers (2, 3) at least in sections,
**characterized,**
- **in that** an assembly adhesive (5) and an end adhesive (6) are provided as the adhesive,
- **in that** the assembly adhesive (5) is a PU adhesive,
- **in that** the central layer (4) is connected to at least one of the two cover layers (2, 3) at least in sections by the assembly adhesive (5),
- **in that** the central layer (4) is connected to at least one of the two cover layers (2, 3) at least in sections by the end adhesive (6),
- **in that** the curing time of the end adhesive (6) is longer than the curing time of the assembly adhesive (5) and
- **in that** the heat resistance of the end adhesive (6) is greater than the heat resistance of the assembly adhesive (5).

2. Lightweight building board (1) according to claim 1, **characterized in that** the end adhesive (6) bonds both cover layers (2, 3) to the central layer (4).

3. Lightweight building board (1) according to claim 1 or 2, **characterized in that** the assembly adhesive (5) and the end adhesive (6) are provided in respectively different, in particular adjacent, sections.

4. Lightweight building board (1) according to one of claims 1 to 3,
**characterized in that** the adhesive (5, 6) has been applied in a flat, strip-like, thread-like and/or punctiform manner.

5. Lightweight building board (1) according to one of claims 1 to 4,
**characterized in that** the end adhesive (6) is a hot melt adhesive, dispersion adhesive or polycondensation adhesive and/or a polyvinyl acetate glue, a ureaformaldehyde resin adhesive or a water glass glue.

6. Lightweight building board (1) according to one of claims 1 to 5, **characterized in that** the adhesive (5, 6) is a non-reactive, one-component reactive or two-component reactive adhesive and/or an adhesive which cures at room temperature.

7. Method for the production of a lightweight building board (1), with two cover layers (2, 3), with a honeycomb structure as a central layer (4), which is arranged between the cover layers (2, 3), and with an adhesive connecting the central layer (4) to the cover layers (2, 3) at least in sections,
**characterized**
- **in that** a PU adhesive connecting the central layer (5) to at least one of the two cover layers (2, 3) at least in sections is applied as an assembly adhesive (5),
- **in that** an end adhesive (6) connecting the central layer (5) to at least one of the two cover layers (2, 3) at least in sections is applied,
- **in that** the curing time of the end adhesive (6) is set longer than the curing time of the assembly adhesive (5), and
- **in that** the heat resistance of the end adhesive (6) is greater than the heat resistance of the assembly adhesive (5).

8. Method according to claim 7, **characterized in that** the layers (2,4; 3,4; 2,3,4) are glued together in a press in such a way that the assembly adhesive (5) immediately after the pressing process causes a first fixation which is suitable to contribute to the stabilization of the bond of the connected layers (2,4; 3,4; 2,3,4) during the curing of the end adhesive (6).

9. Method according to claim 7 or 8, **characterized in that** the adhesive (5, 6) is applied in a flat, strip-like, thread-like and/or punctiform manner.

10. Method according to one of claims 7 to 9, **characterized in that** the adhesive (5, 6) is sprayed, poured on, sprayed on, injected onto and/or rolled on.

11. Method according to one of claims 7 to 10, **characterized in that** first the end adhesive (6) is applied, preferably over the entire surface, to the respective cover layer (2; 3) and/or the central layer (4) and then the assembly adhesive (5) is applied, preferably partially, to the respective cover layer (2; 3) and/or the central layer (4), the end adhesive (6) in particular being rolled on and/or the assembly adhesive (5) being sprayed on.

12. Method according to one of claims 7 to 11, **characterized in that** the assembly adhesive (5) is applied to the previously applied end adhesive (6).

13. Method according to one of claims 7 to 12, **characterized in that** before joining the central layer (4) to the respective cover layer (2; 3), the assembly adhesive (5) is applied to the central layer (4) and the end adhesive (6) is applied to the respective cover layer (2; 3) and/or before joining the central layer (4) to the respective cover layer (2; 3), the end adhesive (6) is applied to the central layer (4) and the assembly adhesive (5) is applied to the respective cover layer (2; 3).

## Revendications

1. Panneau de construction léger (1),
- avec deux couches de couverture (2,3),
- avec une structure en nid d'abeille comme couche centrale (4), qui est disposée entre les couches de couverture (2, 3), et
- avec un adhésif reliant la couche intermédiaire (4) aux couches de couverture (2, 3) au moins par section,
**caractérisé**
- **en ce que**, en tant qu'adhésif, un adhésif d'assemblage (5) et un adhésif final (6) sont prévus,
- **en ce que** l'adhésif d'assemblage (5) est un adhésif PU,
- **en ce que** la couche centrale (4) est reliée à au moins une des deux couches de couverture (2, 3), au moins par section, par l'adhésif d'assemblage(5),
- **en ce que** la couche centrale (4) est reliée à au moins une des deux couches de couverture (2, 3), au moins par section, par l'adhésif final (6),
- **en ce que** la durée de durcissement de l'adhésif final (6) est plus longue que la durée de durcissement de l'adhésif d'assemblage (5) et
- **en ce que** la résistance à la chaleur de l'adhésif final (6) est supérieure à la résistance à la chaleur de l'adhésif d'assemblage (5).

2. Panneau de construction léger (1) selon la revendication 1, **caractérisé en ce que** l'adhésif final (6) relie les deux couches de couverture (2, 3) à la couche centrale (4).

3. Panneau de construction léger (1) selon la revendication 1 ou 2, **caractérisé en ce que** l'adhésif d'assemblage (5) et l'adhésif final (6) sont prévus dans des sections respectivement différentes, en particulier adjacentes.

4. Panneau de construction léger (1) selon l'une des revendications 1 à 3, **caractérisé en ce que** l'adhésif (5, 6) a été appliqué de manière surfacique, en forme de bande, en forme de fil et/ou ponctuelle.

5. Panneau de construction léger (1) selon l'une des revendications 1 à 4, **caractérisé en ce que** l'adhésif final (6) est un adhésif thermofusible, un adhésif de dispersion ou un adhésif de polycondensation et/ou une colle d'acétate de polyvinyle, un adhésif de résine urée-formaldéhyde ou une colle de verre soluble.

6. Panneau de construction léger (1) selon l'une des revendications 1 à 5, **caractérisé en ce que** l'adhésif (5, 6) est un adhésif non réactif, un adhésif réactif à un composant ou un adhésif réactif à deux composants et/ou un adhésif qui durcit à température ambiante.

7. Procédé de fabrication d'un panneau de construction léger (1), avec deux couches de couverture (2, 3), avec une structure en nid d'abeilles comme couche centrale (4) qui est disposée entre les couches de couverture (2, 3), et avec un adhésif reliant la couche centrale (4) aux couches de couverture (2, 3) au moins par section,
**caractérisé,**
- **en ce qu'**un adhésif PU reliant la couche centrale (5) à au moins une des deux couches de couverture (2, 3) au moins par section est appliqué comme adhésif d'assemblage (5),
- **en ce qu'**un adhésif final (6) reliant la couche centrale (5) à au moins une des deux couches de couverture (2, 3) au moins par section est appliqué,
- **en ce que** la durée de durcissement de l'adhésif final (6) est réglée plus longue que la durée de durcissement de l'adhésif d'assemblage (5), et
- **en ce que** la résistance à la chaleur de l'adhésif final (6) est supérieure à la résistance à la chaleur de l'adhésif d'assemblage (5).

8. Procédé selon la revendication 7, **caractérisé en ce que** les couches (2,4 ; 3,4 ; 2,3,4) sont collées ensemble dans une presse de manière à ce que l'adhésif d'assemblage (5), immédiatement après le processus de pressage, provoque une première fixation qui est appropriée à contribuer à la stabilisation de la liaison des couches reliées (2,4 ; 3,4 ; 2,3,4) pendant le durcissement de l'adhésif final (6).

9. Procédé selon la revendication 7 ou 8, **caractérisé en ce que** l'adhésif (5, 6) est appliqué de manière surfacique, en forme de bande, en forme de fil et/ou ponctuelle.

10. Procédé selon l'une des revendications 7 à 9, **caractérisé en ce que** l'adhésif (5, 6) est pulvérisé, versé, vaporisé, injecté et/ou appliqué par roulage.

11. Procédé selon l'une des revendications 7 à 10, **caractérisé en ce que** l'on applique d'abord l'adhésif final (6), de préférence sur toute la surface, sur la couche de couverture respective (2 ; 3) et/ou la couche centrale (4) et ensuite l'adhésif d'assemblage (5), de préférence partiellement, sur la couche de couverture respective (2 ; 3) et/ou la couche centrale (4), l'adhésif final (6) étant en particulier ppliquée par roulage et/ou l'adhésif d'assemblage (5) étant pulvérisé.

12. Procédé selon l'une des revendications 7 à 11, **caractérisé en ce que** l'adhésif d'assemblage (5) est appliqué sur l'adhésif final (6) précédemment appliqué.

13. Procédé selon l'une des revendications 7 à 12, **caractérisé en ce que**, avant de relier la couche centrale (4) à la couche de couverture respective (2 ; 3), l'adhésif d'assemblage (5) est appliqué sur la couche centrale (4) et l'adhésif final (6) est appliqué sur la couche de couverture respective (2 ; 3) et/ou, avant de relier la couche centrale (4) à la couche de couverture respective (2 ; 3), l'adhésif final (6) est appliqué sur la couche centrale (4) et l'adhésif d'assemblage (5) est appliqué sur la couche de couverture respective (2 ; 3).
